(19) Europäisches Patentamt
European Patent Office
Office européen des brevets

(11) EP 1 458 762 B1

(12) EUROPEAN PATENT SPECIFICATION

(45) Date of publication and mention of the grant of the patent:
**02.08.2006 Bulletin 2006/31**

(21) Application number: **02790281.6**

(22) Date of filing: **23.12.2002**

(51) Int Cl.:
***C08B 37/00*** *(2006.01)*

(86) International application number:
**PCT/DK2002/000905**

(87) International publication number:
**WO 2003/059956 (24.07.2003 Gazette 2003/30)**

# (54) A HETEROGENEOUS CARRAGEENAN MANUFACTURING PROCESS FROM MONO COMPONENT SEAWEED WITH REDUCED USE LEVEL OF KOH

EIN HETEROGENES CARRAGEENAN-HERSTELLUNGSVERFAHREN AUS EINER EINZIGEN ALGENART BEI VERMINDERTER KONZENTRATION VON KOH

PROCEDE DE FABRICATION D'UN CARRAGAHEEN HETEROGENE A PARTIR D'UNE ALGUE A MONOCOMPOSANT PRESENTANT UN NIVEAU D'UTILISATION REDUIT D'HYDROXYDE DE POTASSIUM

(84) Designated Contracting States:
**AT BE BG CH CY CZ DE DK EE ES FI FR GB GR IE IT LI LU MC NL PT SE SI SK TR**

(30) Priority: **28.12.2001 DK 200101959**

(43) Date of publication of application:
**22.09.2004 Bulletin 2004/39**

(73) Proprietor: **CP Kelco APS**
**4623 Lille Skensved (DK)**

(72) Inventor: **THERKELSEN, Georg**
**DK-4000 Roskilde (DK)**

(74) Representative: **Klinge, Ulla Callesen et al**
**Chas. Hude A/S,**
**33 H.C. Andersens Boulevard**
**1780 Copenhagen V (DK)**

(56) References cited:
**IE-A- 912 360** **US-A- 2 811 451**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 458 762 B1

Printed by Jouve, 75001 PARIS (FR)

## Description

### Technical Field

The present invention relates to an improved method for the manufacture of gelling carrageenans from seaweed. More specifically the present invention relates to an improved method for the manufacture of gelling carrageenans from seaweed, wherein mono-component seaweed is processed in a heterogenous process involving a reaction step in an aqueous alkaline medium, one or more washing steps and further work-up. In the inventive method inexpensive chemicals, such as inexpensive alkalis may be employed. Furthermore the present invention relates to a carrageenan product obtainable by this method.

### Background Art

Carrageenans comprise a class of polymeric carbohydrates which are obtainable by extraction of certain species of the class Rhodophyceae (red seaweed). In an idealised carrageenan the polymeric chain is made up of alternating A- and B-monomers thus forming repeating dimeric units. However in crude seaweed and thus in processed and purified carrageenans as well this regularity is often broken by some monomeric moieties having a modified structure.

Some carrageenans present particularly desirable hydrocolloid characteristics in the presence of certain cations and thus exhibit useful properties in a wide range of applications. Accordingly carrageenans are used as gelling and viscosity modifying agents in food as well as in non-food products, such as dairy products, gummy candy, jams and marmalade, pet foods, creams, lotions, air fresheners, gels, paints, cosmetics, dentifrices, etc.

In the aforementioned applications the carrageenans are used either as a refined carrageenan (RC) product or as a semirefmed carrageenan (SRC) product containing other seaweed residues.

As stated above the carrageenans comprise alternating A- and B-monomers. More specifically the carrageenans comprise chains of alternating moieties of a more or less modified D-galactopyranose in a $\alpha(1\rightarrow3)$ linkage and a more or less modified D-galactopyranose in a $\beta(1\rightarrow4)$ linkage, respectively. The different types of carrageenans are classified according to their idealised structure as outlined in Table 1 below.

**Table 1**

| Carrageenan n | 3-linked residue (= B) | 4-linked residue (= A) |
|---|---|---|
| Beta (β) | Beta-D-galactopyranose | 3,6-anhydrogalactopyranose |
| Kappa (κ) | Beta-D-galactopyranose-4-sulphate | 3,6-anhydrogalactopyranose |
| Iota (ι) | Beta-D-galactopyranose-4-sulphate | 3,6-anhydrogalactopyranose-2-sulphate |
| Mu (μ) | Beta-D-galactopyranose-4-sulphate | galactopyranose-6-sulphate |
| Nu (ν) | Beta-D-galactopyranose-4-sulphate | galactopyranose-2,6-disulphate |
| Lambda (λ) | Beta-D-galactopyranose-2-sulphate (70%) and galactopyranose (30%) (for Chondrus) | galactopyranose-2,6-disulphate |
| Theta (θ) | Galactopyranose-2-sulphate (70%) and galactopyranose (30%) (for Chondrus) | 3,6-anhydrogalactopyranose-2-sulphate |
| Xi (ξ) | Beta-D-galactopyranose | 2- Alpha-D-galactopyranose-2-sulphate |
| Beta (β) | Beta-D-galactopyranose | 3,6-anhydrogalactopyranose |
| Kappa (κ) | Beta-D-galactopyranose-4-sulphate | 3,6-anhydrogalactopyranose |
| Iota (ι) | Beta-D-galactopyranose-4-sulphate | 3,6-anhydrogalactopyranose-2-sulphate |
| Mu (μ) | Beta-D-galactopyranose-4-sulphate | galactopyranose-6-sulphate |
| Nu (ν) | Beta-D-galactopyranose-4-sulphate | galactopyranose-2,6-disulphate |
| Lambda (λ) | Beta-D-galactopyranose-2-sulphate (70%) and galactopyranose (30%) (for Chondrus) | galactopyranose-2,6-disulphate |
| Theta (θ) | Galactopyranose-2-sulphate (70%) and galactopyranose (30%) (for Chondrus) | 3,6-anhydrogalactopyranose-2-sulphate |
| Xi (ξ) | Beta-D-galactopyranose | 2- Alpha-D-galactopyranose-2-sulphate |

Normally the polymer chains originating from seaweed deviate from the ideal structure in having irregularities present, such as e.g. single moieties within the chain possessing a higher or lower number of sulphate groups. Also co-polymer types (or hybrid types) of carrageenans having two alternating sequences each representing different repeating

dimeric units of two monomers are present in some seaweed species. Accordingly a vast array of different carrageenan materials having different properties exists.

The extent of gelling ability of the different types of carrageenans is inter alia determined by the amount of hydrophilic groups in the galactopyranose rings, molecular weight, temperature, pH and type and concentrations of the salts in the solvent with which the hydrocolloid is mixed.

For gelling purposes, organoleptic and water binding purposes as well as texture and viscosity modifying purposes the most interesting and widely used carrageenans are the kappa-, iota-, theta- and lambda-carrageenans. These are not all present in the crude seaweed, but some of these are obtained by alkali modification of precursor carrageenans (mu-, nu- and lambda-carrageenan respectively) present in the crude seaweed according to the following reaction scheme:

$\mu$-carrageenan + $OH^-$ $\rightarrow$ $\kappa$-carrageenan

$\nu$-carrageenan + $OH^-$ $\rightarrow$ $\iota$-carrageenan

$\lambda$-carrageenan + $OH^-$ $\rightarrow$ $\theta$-carrageenan

Thus by alkali treatment of crude seaweed an intramolecular ether bond is formed within one of the ring moieties in the dimeric units of the carrageenan polymer providing less hydrophilic character to the polymer and accordingly rendering the polymer a more powerful gelling agent. The gelling properties are caused by the carrageenans organizing in a tertiary helical structure.

The kappa and iota structures (and their precursors) differ only by one sulphate group and are in fact always to some extent found in the same molecular chains from one seaweed material, and for this reason this group of carrageenan structures is called the "kappa family" of carrageenan structures. Almost pure kappa/mu respectively iota/nu providing seaweed exist, however, as do seaweeds that provide more equally balanced copolymers or "hybrids".

Likewise, the xi and lambda (and its modified structure, theta after processing) structures are always found in distinct seaweed material which gives rise to the term "lambda family" for this group of carrageenan structures.

Whereas the isolated lambda- and theta-carrageenans are water soluble under almost every condition of temperature and salt concentration, the kappa- and iota-carrageenans - in the potassium and/or calcium salt form - are insoluble in cold water.

All of the above carrageenans are soluble in hot water. The kappa- and iota-carrageenans are able to form gels in the presence of $K^+$, $Ca^{2+}$, $Mg^{2+}$, $Ba^{2+}$, $Sr^{2+}$ and $NH_4^+$. The lambda and theta-carrageenans on the other hand do not form gels.

Some commercially available red seaweed species or populations contain only one carrageenan type (and its precursor). These are called "mono component seaweeds" in the present application. The commercially available seaweed Eucheuma cottonii (also known in the scientific literature as Kappaphycus alvarezii (Doty)) belongs to this category containing only one family of carrageenans, the "kappa family".

Other examples of commercially available mono-component seaweed are Eucheuma spinosum (also known in the scientific literature as Eucheuma denticulatum), Hypnea spp. and Furcellaria spp.

However many available red seaweed species or populations contain at least two carrageenan types (including some of their precursors). These are in the present application called "bi-component seaweeds". The commercially available seaweed Chondrus crispus belongs to this category, containing the "kappa family" as well as the "lambda family" of carrageenan structure, reportedly it may be in the ratio of 70% kappa and 30% lambda. Other examples of commercially available bi-component seaweeds are several species from the Gigartina genus.

In the present application the term "gelling carrageenan" will be used for those carrageenan types which are able to form gels. Thus, the kappa family of carrageenans are "gelling carrageenans", whereas the lambda family of carrageenans are not. The term "gelling carrageenan precursor" denotes in the present application a carrageenan precursor which becomes gelling after alkali modification. Thus the precursor itself may be non-gelling.

Traditionally carrageenans have been manufactured by extraction processes. Thus after wash, the seaweed has been subjected to an extraction with water at high temperature. The liquid extract is then purified by centrifugation and/or filtration. After this, the hydrocolloid is obtained either by evaporation of water or by selective precipitation by a potassium salt, or by an alcohol, such as isopropanol. This method of manufacture yields a pure and concentrated product, but suffers from high production cost.

US 2,811,451 (Tjoa) discloses a treatment of seaweed wherein the seaweed is rinsed and crushed and extracted with water (neutral, acidic or alkaline). By extracting at different temperatures, hydrocolloids with different properties are

obtained. The obtained extracts may be used as they are or may be further processed to obtain a powdery hydrocolloid.

In US 3,094,517 (Stanley) a typical homogenous process for making carrageenan is disclosed. The process involves the use of an alkali, preferably calcium hydroxide. An excess of calcium hydroxide, which may amount to 40% to 115% of the weight of carrageenan present in the seaweed, has proven especially effective. The mixture of seaweed and alkali is then heated to temperatures ranging from 80 °C to 150 °C, for a period of 3-6 hours. The excess alkali may be recovered for reuse, after which filter aid is added and filtration accomplished by any suitable type of equipment, while the mixture is still hot. The filtered extract is then neutralized using any suitable acid. When filtered, the extract is drum dried, spray dried or coagulated with alcohol. When alcohol precipitation is employed, the resulting coagulate is dried using conventional methods.

IE 912,360 (Lhonneur) (equivalent to EP 465,373) relates to a process for manufacturing kappa-carrageenan from Euchema cottonii by treating the seaweed with an aqueous alkaline solution at a temperature of 80-100 °C to solubilize the kappa-carrageenan, filtering the solution and adjusting the concentration of potassium ions to 10-20 g/l before or after filtering, spraying this obtained extract at a temperature of 80-95 °C into a cooled vessel so that gelled carrageenan particles are formed and finally removal of water from said gel. Preferably NaOH is used as alkali in an amount of 30-80 g/l water.

Rideout et al. in US 5,801,240 refer to a prior art method for the production of semi refined or crude carrageenan, and US 5,801,240 relates to improvements to this process. The method of Rideout et al. involves a number of steps: First the raw seaweed is cleaned and sorted. The cleaned and sorted seaweed is then rinsed at ambient temperature with either fresh water or a recycled potassium hydroxide wash. The seaweed is then placed in an aqueous potassium hydroxide cooking solution at 60-80 °C (2 hours at 12 wt% KOH or 3 hours at 8 wt% KOH) to modify the carrageenan and to dissolve some of the alkali soluble sugars. After cooking, the seaweed is removed and drained, and is then put through a series of wash steps to reduce the pH, to wash away residual potassium hydroxide, and to dissolve sugars and salts. Lastly, the resulting semi refined carrageenan is chopped, dried and ground. The inventive process by Rideout et al. further comprises the steps of monitoring the reaction progress by measuring the oxidation-reduction potential and stopping the reaction when an equilibrium as measured by a predetermined constant value of this potential is reached.

Thus, as it appears from the prior art references listed above it is possible to obtain gelling carrageenans from alkali modification of certain species of seaweed. The carrageenans can be obtained in a homogeneous process (by using $Ca(OH)_2$ or NaOH as the alkali) in which the carrageenans are solubilised, or they may be obtained by a heterogenous process (by using KOH as the alkali) in which the kappa-carrageenan remains insoluble. In the carrageenan manufacturing industry the heterogenous process is preferred as this process does not require huge amounts of water for handling the very viscous extracts of carrageenan obtained in the homogenous process. Accordingly, the most widely used and most economic way of conducting a heterogenous process according to the prior art is by using KOH as the alkali in a hot solution, as KOH quite efficiently provides for alkali modification of precursor carrageenans as well as for suppressing solubility of the modified carrageenan thus enabling low reaction volumes.

Thus, as both $K^+$ and $OH^-$ are needed from the added KOH, it is not possible to cost-optimize the concentration of both the $OH^-$ and the $K^+$ individually, without having either to complement a possible $K^+$ deficiency by means of another K-salt, or to accept a possible $K^+$ excess.

One drawback of the prior art method using KOH as the alkali is that KOH is an expensive chemical compared to other alkalis, such as eg. NaOH. Considering the amount of KOH necessary for conducting the heterogenous process according to the prior art method according to US 5,801,240 (8 - 12 wt% is mentioned) substantial savings are contemplated if excess chemical could be avoided and/or if altogether alternative, less costly chemicals might be used in the heterogenous process for the manufacture of carrageenans. Another drawback of the prior art method of Rideout et al. is that little or no recovery is carried out of the unspent "excess" KOH which is left in the wet treated seaweed when exiting the alkali modification step.

Accordingly there exists a need for providing a method for the manufacture of carrageenans employing a heterogenous process in which the use of expensive alkali, such as KOH, can be considerably reduced.

It has now surprisingly been found, that it is possible to conduct a method for the preparation of gelling carrageenans in a heterogenous reaction step in an aqueous alkaline medium in which reaction step the amount of KOH added can be considerably reduced or even completely avoided and wherein the amount of OH-uptake by the treated seaweed may be reduced. The reaction step is followed by one or more washing steps and further isolation steps known per se to obtain either semirefmed carrageenan (SRC) or refined carrageenan (RC).

The method according to the present invention is suitable for the manufacture of carrageenans originating from mono-component seaweed, such as the manufacture of the kappa family carrageenan.

## Brief Description of the Invention

Accordingly, the present invention relates to a method for the manufacture of gelling carrageenan(s), wherein mono-component seaweed containing gelling carrageenan precursor(s) is subjected to

a) a heterogenous reaction step in an aqueous alkaline medium having an OH-concentration and a temperature which enable the modification to the desired extent of the gelling carrageenan precursor(s) to the gelling carrageenan (s);

b) optionally one or more washing step(s) to wash out excess alkali;

c) optionally drying and optionally grinding to obtain semirefined carrageenan (SRC); and/or

d) optionally further extraction, purification and isolation to obtain refined carrageenan (RC)

characterised in that the $OH^-$ concentration required by the seaweed for modification in step a) is obtained by a solution of one or more of the alkalis selected among NaOH, $Na_2CO_3$, Na-phosphates, $K_2CO_3$, K-phosphates and ammonia being supplied thereto, optionally also comprising other suitable alkalis, and in that the aqueous alkaline medium has a salt concentration sufficient to essentially prevent the dissolution of the gelling carrageenan(s) present in the seaweed tissue.

Thus, the present invention is based on the findings that under certain conditions of temperature and salt concentration of the reaction medium it is possible to conduct a heterogenous process for the manufacture of carrageenans without the need for the expensive chemical KOH as the alkali. Using a high salt concentration in the reaction medium further has the beneficial effect of reducing the amount of alkali carried out of the system by the seaweed, and will thus provide for further reduction of the amount of alkali spent in the reaction step. This feature is due to a reduction of the seaweed swelling when processed in a reaction medium having a high salt concentration as compared to reaction media having a low salt concentration.

In the present invention the non-alkali salt concentration of the reaction medium is made up of the dissolved ions supplied to the reaction medium by the seaweed itself, the ions originating from the alkali(s) used, as well as of the ions arising from already reacted alkali and optionally also of non-alkali salts added to the reaction medium. However, in the present application the terms "alkali" and "non-alkali salts" are strictly distinguished. That is, any compound added to the reaction medium, which gives rise to an increased alkalinity should be considered an "alkali". Salts not increasing the alkalinity should be considered "non-alkali salts".

Based on the present market prices of KOH and NaOH and on the fact that in a typical industrial carrageenan manufacturing plant using prior art technique, the production of one kg of carrageenan requires one kg of KOH, a switch from using KOH to using NaOH as the alkali in the reaction step would mean a reduction in alkali costs of more than US $ 0.25/kg carrageenan produced. Thus, in a typical carrageenan manufacturing plant having an annual capacity of 2,000 metric tons carrageenan, savings of more than US $ 500,000 per year are contemplated.

## Brief Description of Drawings

The invention is disclosed in more detail by reference to the drawings wherein:

Fig. 1 depicts viscosity measurements of Eucheuma cottonii as a function of temperature under conditions of 5 % (w/v) NaOH and 1 % (w/v) KCl, and at different NaCl concentrations. It appears from fig. 1, that the viscosity rapidly rises at higher temperatures, indicating that the gelling carragenan dissolves and that, subsequently, the seaweed disintegrates (visually observed). The viscosity is rather low at temperatures below 70-75 °C, thus indicating that no carrageenan dissolution nor seaweed disintegration appear at these temperatures at any of the NaCl concentrations chosen.
Based on the measurements illustrated in fig. 1 and accompanying visual observations of seaweed disintegration, approximate "threshold" NaCl concentrations can be determined for each chosen temperature. This leads to the appearance of an approximate "phase diagram" for the seaweed being subjected to alkali treatment. This is seen in Fig. 2.

Fig. 2 is accordingly a phase diagram showing the threshold concentration of NaCl for keeping the gelling carrageenan in different mono-component seaweeds insolubilised under conditions of an alkali strength of 5 % (w/v) NaOH and 1 % (w/v) KCl at different temperatures. Fig. 2 depicts these threshold concentrations for the species Eucheuma cottonii, Hypnea musc., Eucheuma spinosum and Furcellaria umbric., respectively. Fig. 2 thus reveals, that the gelling carrageenan in a certain mono-component seaweed will remain insolubilised in a 5 % (w/v) NaOH solution at temperatures below a specific point at the curve corresponding to this seaweed at the corresponding NaCl concentration. In other words, the area below the curves corresponds to situations - or combinations of temperature and NaCl concentrations - in which the gelling carrageenans are solubilised.

Fig. 3 is a simple flow chart depicting one mode for carrying out the method of the present invention. In Fig. 3 the seaweed is located in a stationary reaction tank (SW), and the different liquids to be used in the various steps according to the invention are transferred to and from this tank. Thus, step a) - the alkali modification step - is performed in the Reaction Zone (RZ). $R_1$ symbolises a tank containing the aqueous alkaline medium to be used in step a). In the Further Work-up Zone (FWZ) step b) is carried out. That is, the seaweed is washed with washing liquid in order to wash out any residual alkali. The washing may be performed by one or more washing steps. In Fig. 3 $W_1$, $W_2$,... $W_n$ symbolise different tanks containing the washing liquids to be used in step b). After these steps the seaweed may be processed in a manner known per se to semirefined carrageenan (SRC) or refined carrageenan (RC).

Fig. 4 shows a preferred mode for carrying out the method according to the invention in which a counter current set-up is established between the Reaction Zone and the Further Work-Up Zone. This is done by introducing a Lye Recovery Zone (LRZ) between the Reaction Zone and the Further Work-Up Zone. In the Lye Recovery Zone (LRZ), $L_1$, $L_2$, ... $L_n$ denote tanks containing lye recovery solution. The arrows and accompanying numbers in Fig. 4 indicate the direction and chronological order of the flows in this counter current mode of carrying out the method according to the invention. This set-up will provide for an upstream movement of alkali and salts in the system and thus enable considerable reductions in the consumption of chemicals employed. This mode of carrying out the method according to the invention requires that a deficiency of water is created in the reaction step, e.g. by ensuring that the seaweed is introduced in the reaction step in a dry state or by providing some means for reducing the volume of the upstream moving medium, such as eg. evaporation means.

The extent of applicability of the invention appears from the following detailed description. It should, however, be understood that the detailed description and the specific examples are merely included to illustrate preferred embodiments, and that various alterations and modifications within the scope of protection will be obvious to persons skilled in the art on the basis of the detailed description.

**Best Mode for Carrying out the Invention**

The invention will now be explained in general terms with reference to Fig. 3. In Fig. 3 the seaweed is located in a stationary tank equipped with suitable agitation means and the liquids with which the seaweed is to be treated are transferred to and from this tank. Fig. 3 only serves to explain one simple way of carrying out the method according to the invention, and thus to show how the individual steps in the inventive method may be performed. Thus, a person skilled in the art will know how to adapt the process set-up of Fig. 3 to other types of set-ups, e.g. to a process set-up in which the seaweed is not stationary, but moved from one tank to another.

It should be stressed that terms such as: "aqueous medium", "aqueous solution" and "aqueous liquid" in the present application comprises a liquid substance comprising water, and it may thus also comprise some amounts of other solvents, such as alcohols. The amount of other solvents than water on a weight/weight basis may amount to 0-50 %, such as 0-20 %, eg. 0-10 % or 0-5 %.

The process set-up of Fig. 3 comprises two zones; a Reaction Zone (RZ) and a Further Work-Up Zone (FWZ). These zones comprise a number of tanks containing the liquids to be used in each step. In Fig 3 the arrows and accompanying numbers of the arrows indicate the direction and chronological order of the flows in the process. Preferably the seaweed and the liquid is agitated in each step in order to obtain thorough and efficient reaction/extraction.

The tanks in each step should have a size and a content that are sufficient for conducting the processes in each step efficiently. Thus, tanks having a volume that is not sufficient to contain the amount of liquid necessary in each step should be avoided.

<u>Reaction Zone</u>

In the Reaction Zone an alkaline aqueous medium situated in the reaction medium tank ($R_1$) having a specified alkali concentration is transferred to the seaweed tank (SW) as indicated by the arrow (1) and the reaction is carried out on the seaweed for a time sufficient to modify the carrageenan to a desirable extent. Thereafter the used liquid is transferred back to the tank ($R_1$) as indicated by the arrow (2).

<u>Further Work-Up Zone</u>

After the reaction step, the seaweed is subjected to one or more washing steps. This takes place in the Further Work-Up Zone. The Further Work-Up Zone comprises a number of tanks ($W_1$), ($W_2$), ... ($W_n$) containing the washing liquids to be used in each step. In the Further Work-Up Zone washing liquid is transferred from the first washing liquid

tank ($W_1$) to the seaweed tank (SW). This is indicated by the arrow (3). After a suitable washing time, the washing liquid is discarded as indicated by the broken arrow (4). Alternatively some of the used washing liquid from the first washing step may be transferred to the reaction medium tank ($R_1$) as indicated by the broken arrow (5), and the rest may be discarded as denoted by the broken arrow (4).

Then ($R_1$) is adjusted to the original alkali strength by adding alkali as indicated by (6) (obviously, this adjustment does not have to take place at this particular point, but the adjustment has to be carried out before running the batch to come). Next, washing liquid from ($W_2$) is transferred to the seaweed tank (SW) as denoted by the arrow (7) and after a suitable amount of time the used washing liquid is discarded as denoted by the arrow (8). Repeated cycles of adding washing liquid to (SW) and washing for a suitable amount of time and discarding used washing liquid are contemplated. This is shown for the n'th washing step by the arrows (9) and (10) respectively. Usually 3 washing steps will suffice, but only one as well as 4, 5 or 6 or more washing steps are contemplated. After a suitable number of washing cycles the seaweed may be further processed to semi-refined carrageenan (SRC) or refined carrageenan (RC) as indicated by the arrow (11).

The previous sections have primarily focussed on the chronological order of the flows of liquids according to the method of the present invention as represented by Fig. 3. The following sections will focus more detailed on the various conditions of the single steps of the reaction and further work-up respectively according to the method of the present invention.

<u>The Heterogenous Reaction Step</u>

In the reaction step in the method according to the present invention various parameters have to be balanced in order to obtain conditions that provide acceptable results, i.e. specific conditions are necessary in order to keep the carrageenan undissolved, yet still being modified. These parameters comprise type of seaweed employed, type and concentration of alkali, type and concentration of non-alkali salts, temperature of the aqueous alkaline medium, reaction time, degree of agitation etc.

One requirement to the reaction conditions is that a sufficient salt concentration is present in the reaction medium in order to suppress or essentially prevent the carrageenans from being solubilised at the temperature employed. The sufficient salt concentration may be provided by ions present in the seaweed itself or it may be provided by adding one or more ion providing agents, such as salts. Thus in the reaction step according to the method of the present invention the aqueous medium used comprises alkali and optionally further comprises other non-alkali salts. The sufficient salt concentration may be provided by adding to the reaction medium one or more non-alkali salts, such as salts selected among sulphates, and/or chlorides of sodium, potassium and/or calcium. As an example a non-expensive salt, such as NaCl has been found useful for imparting the sufficient salt concentration in the reaction medium.

Fig. 2 reveals possible combinations of non-alkali salt concentration, alkali concentration, temperature and type of seaweed with which the gelling carrageenan remains insolubilised and non-disintegrated. A person skilled in the art will know how to conduct similar simple experimentation in order to obtain corresponding diagrams revealing dissolution and disintegration thresholds for seaweed species under other conditions, i.e. under conditions of employment of other alkalis and non-alkali salts. For more details reference is made to Example 1.

In the method according to the present invention, the alkali consumption may in principle be split into two parts; part 1: consumption due to neutralisation of liberated sulphuric acid from the carrageenans and hydrolysis of organic material in the seaweed, and part 2: washing loss, i.e. the residual alkali carried out of the reaction step by the treated seaweed. Part 1 above contributes normally to the greatest amount of alkali consumption.

The purpose of the heterogeneous reaction step is to convert the gelling carrageenan precursor(s) to gelling carrageenan(s). This is done by alkali modification of the precursor(s). Based on literature findings (see e.g. Ciancia et al., in Carbohydrate Polymers 20 (1993), pp. 95-98), we may assume that the homogeneous alkali modification reaction of carrageenans follows overall 2nd order reaction kinetics. If we assume something similar for the heterogeneous reaction, we get:

$$- r_A = k_A * C_A * C_B$$

wherein

$r_A$ = the rate of reaction of reactant A ( = carrageenan precursor)
k = rate constant, a function of temperature
$C_A$ = concentration of reactant A (= carrageenan precursor)
$C_B$ = concentration of reactant B (= hydroxyl ions)

This illustrates the practical experience that a certain extent of modification of any one precursor carrageenan type may be obtained by a number of different combinations of temperature, and alkali strength.

The Seaweed

The seaweed to be used in the method according to the present invention must be a mono-component seaweed. Thus, species like Eucheuma cottonii, Hypnea muse., Eucheuma spinosum and Furcellaria umbric. are particularly useful as starting material in the method according to the present invention. The seaweed is commercially available in a relatively dry form and dry matter contents of from 45 to 90 % is normal. The seaweed may be introduced in the reaction step in a dry or in a wet state. However, when a counter current process set-up - as described later - is applied, the seaweed should be introduced in the reaction step in a dry state in order to utilise the advantages obtainable by this set-up, such as savings in the consumption of chemicals employed in the process. Alternatively the necessary deficiency of the upstream moving medium may in such a set-up be obtained by providing means for reducing the volume of this upstream moving medium, such as eg. evaporation means. The ratio of seaweed to aqueous alkaline medium depends of the amount of liquid present in the seaweed. Preferably the ratio of seaweed to aqueous alkaline medium is within the range 1:5 - 1:20 based on weight of dry seaweed.

Type of Alkali

According to the present invention the reaction step is carried out in an aqueous alkaline medium, wherein the $OH^-$ concentration required by the seaweed for modification is obtained by an alkali solution comprising one or more alkalis selected among NaOH, $Na_2CO_3$, Na-phosphates, $K_2CO_3$, K-phosphates and ammonia being supplied thereto, optionally also comprising other suitable alkalis. Thus, the heterogenous reaction according to the invention is possible in another type of alkaline medium than KOH. Even a NaOH solution, which until now has been considered unable to prevent kappa-carrageenan and iota-carrageenan from entering into solution, is suitable as an alkali in the reaction step according to the present invention. The requirement to the alkali is that it is present in an amount sufficient to modify the gelling carrageenan precursor present in the seaweed to a desirable extent at the temperature employed.

Considering that the inventive concept according to the present invention is to reduce the amount of or even avoid the expensive chemical KOH as the alkali employed in the reaction step in the modification of carrageenan(s), KOH is not desirable in the aqueous alkaline solution supplied to the seaweed in the reaction step. However, certain amounts of KOH may be included in the alkali solution supplied to the seaweed in the reaction medium if appropriate. Obviously the degree of beneficial cost-saving effect of the method of the present invention will depend on the ratio of KOH included in the alkali solution supplied to the seaweed in the reaction medium. Thus, the most cost beneficial effect is obtained when employment of KOH is completely omitted, and less beneficial effect is obtained when increasing amounts of KOH is included. In the present invention it is contemplated that various ratios of KOH to total amount of alkali may be employed. Also other types of alkalis may be employed in combination with the NaOH, $Na_2CO_3$, Na-phosphates, $K_2CO_3$, K-phosphates, ammonia or mixtures thereof. Considering the above, it is contemplated that the ratio of NaOH, $Na_2CO_3$, Na-phosphates, $K_2CO_3$, K-phosphates, ammonia or mixtures thereof to the total amount of alkali in the alkaline solution supplied to the seaweed, calculated on a dry weight/weight basis, should be in the range of 10 - 100 %, e.g. 20 - 100 %, such as 30 - 100 %, preferably 40 - 100% or 50 - 100 %, more preferred 60 - 100 %, yet more preferred 70 - 100 %, such as 80 - 100 % and most preferred 90 - 100 %. In a special embodiment of the method of the present invention, the alkali in the alkaline solution supplied to the seaweed in the reaction step essentially consists solely of NaOH, $Na_2CO_3$, Na-phosphates, $K_2CO3$, K-phosphates, ammonia or mixtures thereof, and in a preferred embodiment of the method of the present invention the alkali in the alkaline solution supplied to the seaweed in the reaction step essentially consists solely of NaOH.

If NaOH is used as the only alkali source, the concentration $C_B$ of the alkali may be within the range 0 % < $C_B$ < 12 % (w/v), preferably 0.05 % (w/v) < $C_B$ < 10 % (w/v), most preferred 0.1 % (w/v) < $C_B$ < 8 % (w/v). If another alkali or a mixture of other alkalis is/are used the concentration of this/these alkali(s) should be adjusted so as to obtain a solution having a modification power corresponding to the modification power of the NaOH solution having a concentration within the above ranges. The concentration necessary for other alkalis or mixtures of alkalis may be found by simple experimentation.

Temperature

The temperature should be chosen so that it is possible to conduct the reaction step in a time period of less than about three hours. However longer reaction times are possible, but less preferred due to practical concerns. When choosing the reaction temperature, consideration concerning the solubility of the carrageenans should be taken. Thus the reaction temperature to be used is limited to values for which the carrageenans essentially do not enter into solution

- these values are dependent of the salt concentration and the concentration and composition of the aqueous alkaline medium. The temperature of the aqueous alkaline medium typically ranges within 20 - 95 °C. When NaOH is used as the alkali a temperature of 45 - 85°C, preferably 55 - 75 °C, most preferred about 65 ° C may be applied. Such temperatures may render additional non-alkali salts unnecessary. Since the solubility of carrageenans generally increases with increasing temperature, lower temperatures require lower salt concentration and vice versa. Preferably the aqueous alkaline medium is heated to the reaction temperature prior to the mixing with the seaweed, but it may also be heated after mixing with the seaweed.

Non-alkali Salts

Under some combinations of reaction parameters, the reaction step may be performed heterogeneously (i.e. the carrageenans essentially remains undissolved) without the addition to the aqueous alkaline reaction medium of other chemicals than the needed alkali. In such a situation the alkali itself (in combination with the ions optionally accompanied with the seaweed) provides sufficient salt concentration in the medium to keep the carrageenans essentially undissolved.

If, on the other hand, reaction conditions are chosen so that the carrageenans essentially could dissolve in the course of the reaction step, the dissolution of the carrageenans may be suppressed or even avoided by further addition to the reaction medium of non-alkali salts. Also the seaweed's swelling during the alkali treatment, and thereby also its uptake and removal of unspent $OH^-$ when exiting the reaction step, may be reduced by the addition to the reaction medium of non-alkali salts. These non-alkali salts may in principle be of any type, but cost considerations will of course limit the type range of such practically useful salts. Another restricting factor for suitable salts is that they should not act as acids which decrease the alkalinity of the medium. Thus, suitable non-alkali salts may be chosen among sulphates and/or chlorides of sodium, potassium and/or calcium.

Balancing Various Reaction Parameters

As it appears from the sections above, several parameters have to be balanced in order to obtain reaction conditions that provide for modifying the carrageenan precursor while still keeping the carrageenans undissolved. Such combinations of reaction parameters which provide conditions which allow the reaction step to be conducted heterogenously can be deduced from Fig. 2 for the seaweed species Eucheuma cottonii, Hypnea musc., Eucheuma spinosum and Furcellaria umbric., respectively. Accordingly it is seen from Fig. 2 that the carrageenan in the species Eucheuma spinosum remains undissolved in a 5% (w/v) NaOH solution comprising 1 % (w/v) KCl up to temperatures of 85 °C. Above 85 °C an amount of up to 17 % (w/v) NaCl is needed in the reaction medium in order to keep this carrageenan undissolved. For the species Eucheuma cottonii and Hypnea musc., on the other hand, additional salt concentration is needed at temperatures above 70 °C in order to keep the carrageenans undissolved. Thus by addition of increasing amounts of NaCl it is possible to keep these carrageenans undissolved also at higher temperatures. Again, at a NaCl concentration of 17 % (w/v) the carrageenans remain undissolved at temperatures up to 95 ° C. Finally, Fig. 2 reveals that compared to the former two species the carrageenan in the species Furcellaria umbric. is more soluble at lower temperature (approximately below 72 ° C), but less soluble at higher temperatures. Thus, Furcellaria umbric. needs additional salts at all temperatures above 60 °C in order to keep the carrageenans undissolved.

When a high extent of reaction (carrageenan modification) is desired, a combination of process parameter values is normally chosen which gives a high reaction rate: high alkali strength during the whole reaction time and high temperature. E.g. > 3 % (w/v) NaOH, 75 °C, 3 hours. A high extent of carrageenan modification will result in carrageenan with high gel strength.

Incomplete Alkali Modification

In some cases, however, there is a need for accomplishing an incomplete alkali modification of the carrageenan in the seaweed. By restricting alkali modification, carrageenans with less gelling power can be produced. Such carrageenans produce gels of lower gel strength with less water exudation or syneresis and are advantageous for making gels with increased spreadability and an increased creamy mouth feel. These carrageenans are particularly important in the manufacture of dairy desserts. In the present application also these carrageenans are classified as "gelling carrageenans". Such incomplete alkali modification may be provided by employing reaction conditions of reduced alkali strength, reduced reaction time and/or reduced temperature.

When a low extent of reaction (carrageenan modification) is desired, a combination of process parameter values is normally chosen which gives a low reaction rate: low initial and (more importantly) low final alkali strength, temperature and time may also be reduced if needed. E.g. < 2 % (w/v) NaOH, 60 °C, 2 hours.

Counter Current Mode

A preferred way of carrying out the method according to the present invention is to employ a counter current process set-up. Such a counter current process set-up will provide for substantial cost reductions when running several batches as the chemicals employed in the process are reused when running a later batch. When performing the counter current process, it is preferred that the seaweed to be introduced in the reaction medium is dry in order to create a deficiency in the upstream moving medium due to the swelling of the seaweed. Alternatively, such a deficiency may be obtained by providing means for reducing the volume of the upstream moving liquid, such as eg. evaporation means. The counter current mode will now be described briefly with reference to Fig. 4. However, complete directions of how to perform this reuse of chemicals by employing a counter current process is disclosed in Applicant's co-pending patent application No. WO...

In Fig. 4 a Lye Recovery Zone (LRZ) is introduced between the Reaction Zone (RZ) and the Further Work-Up Zone (FWZ) .The Lye Recovery Zone comprises a number of tanks. A single step in the Lye Recovery Zone is also possible, but generally 2, 3 or 4 steps will usually be employed to provide for a sufficient recovery of the alkali employed in the Reaction Zone. In a start-up situation the liquids to be used in the tanks of the Lye Recovery Zone - in this application referred to as lye recovery solutions - may contain only water. After running a number of batches a steady state situation will be approached, wherein each tank will contain a lye recovery solution having a concentration of alkali and other solutes which is less than in the liquid in the previous tank. Alternatively, in the start-up situation the tanks may already be prepared with this stepwise decreasing alkalinity.

In the Reaction Zone an aqueous alkaline medium situated in the reaction medium tank ($R_1$) having a specified alkali concentration is transferred to the seaweed tank (SW) as indicated by the arrow (1) and the reaction is carried out on the seaweed for a time sufficient to modify the carrageenan to a desirable extent. Thereafter the used liquid is transferred back to the tank ($R_1$) as indicated by the arrow (2).

In the Lye Recovery Zone lye recovery solution is supplied from ($L_1$) to the seaweed tank (SW) as denoted by the arrow (3). The seaweed is processed for a suitable time. Because the seaweed in the reaction step has absorbed some of the alkaline solution fed to the seaweed by (1) the amount of alkali solution in ($R_1$) is less than originally. Thus, ($R_1$) is fed with the used lye recovery solution from the first lye recovery step in order to make up the original amount of alkali solution in ($R_1$) as indicated by the arrow (4). After this, the alkali strength in ($R_1$) is adjusted to the original value by adding alkali as indicated by (5) (obviously, this adjustment does not have to take place at this particular point, but the adjustment has to be carried out before running the batch to come). The rest of the used lye recovery solution from the first lye recovering step is then recycled from the seaweed tank (SW) back to ($L_1$) as indicated by the arrow (6).

In the next step in the Lye Recovery Zone, lye recovery solution is supplied from ($L_2$) to the seaweed tank (SW) as indicated by the arrow (7). After processing for a suitable time the amount of lye recovery solution in ($L_1$) is then made up to its original value by feeding the used lye recovery solution from the second lye recovery step to ($L_1$) as indicated by the arrow (8). The rest of the used lye recovery solution from the second lye recovery step is then recycled to ($L_2$) as indicated by the arrow (9).

Repeated cycles of these lye recovery steps can be performed in a similar way, where part of the used lye recovery solution in a lye recovery step is transferred to the tank from which the lye recovery solution from the previous step originates, and where the rest of the used lye recovery solution in said lye recovery step is recycled to the tank from which it originates. This is indicated by the arrows (10), (11) and (12) for the n'th lye recovering step. As noted above, 2, 3 or 4 lye recovery steps will normally suffice. However, even only 1 lye recovery step as well as 5, 6 or more steps are contemplated. After the last lye recovery step the seaweed may be further processed in the Further Work-Up Zone (FWZ) as described in this application. This is denoted by the arrow (13). Due to the upstream movement of liquids in the system, the Tank (Ln) needs replenishing. The source of liquid to this replenishing may be used washing liquid from the Further Work-Up Zone (FWZ) as denoted by the arrow (14). Alternative, the replenishing of (Ln) may be completed by means of an external source of e.g. water as denoted by (15).

If, in the start-up situation the tanks in the Lye Recovery Zone contained water these will now contain an alkaline solution each having a weaker alkalinity than the preceding tank. When a number of batches have been processed a steady state will be approached in which the alkalinity in each lye recovery tank essentially remains constant during the continued processing of further batches. This steady state situation will also arise if the tanks have been preadjusted with successively decreasing basicities.

Washing step(s)

When the reaction for modifying the carrageenan(s) is accomplished one or more washing steps is/are conducted in the Further Work-Up Zone (as it appears from Fig. 3) in order to wash out any residual alkali and/or non-alkali salts. The washing liquid is typically water. However if a reaction medium having a relatively high content of sodium ions is utilised in the reaction step, and if water is used as washing liquid, the gelling carrageenan end product of the inventive

method, i.e. the semirefmed carrageenan (SRC) or the refined carrageenan (RC) may be a carrageenan polymer having to a very large extent sodium ions as counter ions to the sulphate groups. These types of carrageenans may for some purposes be less desirable due to their gelling characteristics. Thus, in such situations it is desirable to perform an ion exchange before obtaining the end product. Such an ion exchange is typically performed with a potassium salt, such as e.g. KCl or $K_2SO_4$, if the gelling carrageenan is kappa-carrageenan in order to obtain an end product having to a very high extent potassium ions as counter ions to the polymer sulphate groups. If, on the other hand, the gelling carrageenan is iota-carrageenan it is often desirable to perform an ion exchange with a calcium salt, such as $CaCl_2$ in order to obtain an end product having to a very high extent calcium ions as counter ions to the polymer sulphate groups.

In the event ion exchange is contemplated, the washing liquid in at least one of the washing steps may in a preferred embodiment contain the ions needed for the ion exchange. Thus, one or more of the tanks containing the washing liquid may comprise a potassium or a calcium salt in solution. The concentration of such an ion exchange salt may be within the range of 0.1 to 10 % (w/v).

Sometimes it may be desirable to make sure that all alkali has been eliminated before the alkali treated seaweed is further processed into the carrageenan product(s). This may be done by treating the seaweed with a weak acidic solution in one of the washing steps, preferably the last washing step.

Sometimes it may be desirable to bleach the seaweed before further processing. This may be done by adding an oxidising agent, e.g. a hypochlorite or hydrogen peroxide to the wash solution, preferably in the last washing step.

The temperature of the washing liquid depends of the type of seaweed source. Generally a temperature in the range of 5 -70 ° C, normally in the range of 10 - 50 ° C is employed. However, a too high temperature that may result in solubilising the gelling carrageenans should be avoided.

Preferably repeating cycles of adding washing liquid, agitation and removal of used washing liquid are conducted in order to reach an end product of desirable quality.

Further work-up to obtain SRC or RC

After the last washing step the remaining solid seaweed may be recovered and optionally further worked up in a manner known per se. Thus, the manufacture of semi-refined carrageenan (SRC) as well as refined carrageenan (RC) types of carrageenan products are possible in the process according to the present invention.

One method for the manufacture of refined carrageenan (RC) might be to conduct a traditional refining by extraction, i.e. to add water to the seaweed, neutralize by means of acid in order to obtain a suitable pH and thereafter heating to dissolve the carrageenan contained in the seaweed, remove seaweed residues by suitable solid/liquid separation, precipitate the carrageenan selectively by e.g. isopropanol, dewater the precipitate, dry and grind.

Prior art discloses how part of the refining, for some seaweeds, may be preferentially carried out heterogeneously by washing. This implicitly makes it possible to produce, at a low cost, semi-refined carrageenan (SRC) which has never been dissolved (extracted) from the seaweed. For a more detailed description of the final processing reference is made to U.S. 5,801,240.

## Examples

### Determining Gelling Performance

In the subsequent examples the following performance grading method was used in order to determine the gelling performances of the obtained products.

The "grading methods" build on the principle that the grade value is proportional to the value of the functional performance of the product in the medium. Within every method we have to define one exact product sample as being *the standard,* having a grade strength = 100° (or other number, for that matter).

Consequently, if a new sample shows a grade strength of 50°, one needs double dosage in the medium to obtain the same performance as of the standard, i.e. the (commercial) value of the 50° sample is 50 % of the value of the 100° sample.

In each of the performance grading methods as described below, measurements are made of the functional effect (e.g. gel strength or viscosity) at certain concentrations of sample (SRC or RC). These concentrations of sample ("target sample concentrations") are chosen empirically to give strengths close to a defined target whereby the "grades" may be calculated by intrapolation or extrapolation. The grade value is in principle inversely proportional to the needed sample concentration for giving a target functional effect in the medium and is defined in relation to a standard having a defined grade number, as mentioned above.

The "grades" may be obtained, on a sample dry matter basis, by multiplying by the term: 100 / (% D.M. in powder). D.M. (dry matter) being determined by drying the product in a drying cabinet for four hours at 105 °C, weighing before and after.

**Milk Gel strengths, °MIG-R and °MIG-B**

This method is intended to reflect the product's gelling performance in milk dessert products and serves to calculate the grade strengths: °MIG-R (milk gel *rigidity* grade at 2 mm deformation) and °MIG-B (milk gel grade at *break* point).

Determination of Target Sample Concentrations

If the sample is expected to perform at for instance X °MIG-R, the amount in grams of sample powder, Y, to be used in the procedure below will be Y = 1.00 g * (100 / X). Thus, if for instance X = 100 °MIG-R, the powder amount should be 1.00 g and if for instance X = 50 °MIG-R, the powder amount should be 2.00 g. Two different sample concentrations $Y_1$ and $Y_2$ are chosen based on this, both close to the found value of Y, in order to enable a suitable intra- or extrapolation. Thus, the procedure described below will be performed for each sample concentration individually.

The product sample standard for this method is: GENULACTA Carrageenan P-100-J, lot no. 02 860-0 which is rated at 101 1 °MIG-R (determined at a target R value of 40.0 g) and 114 °MIG-B (determined at a target B value of 100 g). To be able to calculate the "grades" of the sample in relation to this standard, the procedure described below must be performed for two different sample concentrations individually, also for this standard sample.

Milk Gel Preparation

50.0 g of skim milk powder (MILEX 240, MD Foods Ingredients amba) and $Y_n$ g sample ($Y_n$ = a target concentration, to be determined as described above) are placed in a tared 1 liter glass beaker and the powders mixed with a spatula. 450 g of de-ionised water is added to the beaker under stirring. The mixture is heated to 68 °C in a water bath and kept at this temperature for 5 minutes while maintaining stirring. The contents of the beaker are then made up to a total weight of 500.0 g by means of adding de-ionised water and stirring to mix. The solution is then poured into two crystallisation dishes (diam. 70 mm, height 40 mm, each provided with adhesive tape on its vertical brims for extending the height of the dish to above 50 mm). The surface of the solution is to extend to approx. 10 mm above the glass brim of the dish while still being confined by the adhesive tape. The dishes are then placed in a thermostatised bath at 5 °C. After 2.5 hours in the cooling bath, gels have formed. The dishes are taken up, the adhesive tape removed from the brim and the the upper surface of the gel is cut level to the brim of the dish by means of a wire cheese slicer.

Gel Measurements

The gel modulus and rupture strength were measured on a SMS Texture Analyser Type TA-XT2 using a plunger diameter of 1 inch and a plunger velocity of 1 mm / sec. The *rigidity R* (modulus) is recorded as the plunger pressure at 2 mm depression of the gel surface. The *break B* (rupture) is recorded as the plunger pressure at the rupture of the gel. Each measurement is made on each of the two gel dishes and averaged *($R_{avg}$ and $B_{avg}$)*.

Computation of Grade Strengths

For both the sample and the standard, the concentration needed to give a defined target R value of 40.0 g is determined by intra- or extrapolating from the two $R_{avg}$ values obtained for each of the two products: sample resp. standard. These calculated concentrations are termed $YR_{SA}$ and $YR_{ST}$ respectively.

The °MIG-R is defined as: ($YR_{ST}$ * 101 / $YR_{SA}$) °MIG-R

Likewise, for a defmed target B value of 100 g, the two concentrations $YB_{SA}$ and $YB_{ST}$ respectively are found.

The °MIG-B is defmed as: ($YB_{ST}$ * 114 / $YB_{SA}$) °MIG-B

**Example 1**

This example illustrates how the Viscosity Diagram of Fig. 1 and the Phase Diagram of Fig. 2 were constructed.

Approximately 10 kg of E. cottonii seaweed (approx. 60% solids) was chopped into pieces of sizes of 2 - 4 cm. These pieces were mixed thoroughly.

201 of a alkali stock solution containing 5 % (w/v) NaOH and 1 % (w/v) KCl was then prepared. This alkali stock solution was kept at room temperature. A series of solutions of NaCl was prepared on the basis of the above alkali stock solution. These NaCl solutions had a NaCl concentration of 0, 5, 10, 15, 20 and 25 % (w/v) respectively. These solutions were also kept at room temperature.

For each of the above six alkali solutions 1.8 1 thereof was filled into a 31 beaker mounted on a heating plate provided with a laboratory agitator (crossbar propeller; Ø: 50 mm) running at 240 rpm. Each solution was heated to 60

°C and 140 g chopped seaweed was added so as to obtain complete soaking of the seaweed. To each beaker was added NaOH/KCl/NaCl solution having the NaCl concentration in question to make up a total volume of 2.01. Each suspension was reheated to 60 ° C and kept at this temperature for 30 min. Then heating was increased so as to obtain an increase of approximately 2 °C per 5 min. At every 5 °C interval the following observations were made:

- visual observation: disintegration, colouring, dissolution;
- viscosity measurements: a liquid sample was collected at the temperature in question. This was filled in a viscosity glass (internal Ø: 50 mm, height: 115 mm). The viscosity was measured with a Brookfield LVT viscometer after 30 sec. of rotation (spindle 1).

The viscosity readings are listed in Table 2 below.

In the far right column, the "threshold NaCl concentration" is estimated for each measured temperature as being the minimum NaCl concentration needed for avoiding dissolution of carrageenan, as indicated by a rising solution viscosity reading. In all cases, the visual observation of incipient disintegration of the seaweed material came at, or below, the above mentioned "threshold NaCl concentration". Fig. 1 is a graphical illustration of the data from table 2. It should be noted that the graph corresponding to the values of 25 % NaCl coincides with the graph corresponding to the values of 20 % NaCl and accordingly is not to be seen explicitly in Fig. 1.

**Table 2**

| Temp. °C | Viscosity (cP) in solutions of 5 % (w/v) NaOH, 1 % (w/v) KCl and various NaCl concentrations (% NaCl (w/v)) | | | | | | Threshold NaCl concentrations |
|---|---|---|---|---|---|---|---|
| | 0 | 5 | 10 | 15 | 20 | 25 | % (w/v) |
| 60 | 4 | 3.5 | 4 | 4 | 4 | 4 | 0 |
| 65 | 4 | 3.5 | 4 | 4 | 3.5 | 3.5 | 0 |
| 70 | 4 | 4 | 4.5 | 3.5 | 3.5 | 3.5 | 0 |
| 75 | 6 | 4 | 5 | 3.5 | 3.5 | 3.5 | 10 |
| 80 | 7.5 | 5 | 5.5 | 3.5 | 3.5 | 3.5 | 13 |
| 85 | 11.5 | 7 | 8 | 4 | 3.5 | 3.5 | 15 |
| 90 | 24.5 | 10 | 13 | 6 | 3.5 | 3.5 | 17 |
| 92 | 87.5 | 22.5 | 45 | 8 | 3.5 | 3.5 | 17 |
| 93 | | 51 | 51.2 | 9 | 3.5 | 3.5 | 17 |
| 94 | | | 56 | 10 | 3.5 | 3.5 | 17 |
| 95 | | | | 11.5 | 3.5 | 3.5 | 17 |

**Example 2**

This example illustrates the seaweed swelling factor and product qualities as a function of salt concentration in the alkali solution used for modification.

Preparation of SRC

Approximately 10 kg of E. cottonii seaweed (approximately 70 % solids) was chopped into pieces having sizes of 2 - 4 cm and these were then mixed thoroughly. A stock solution of 1201 of 5 % (w/v) NaOH and 1 % (w/v) KCl was prepared and kept at room temperature.

A series of NaOH/NaCl/KCl solutions having concentrations of 0, 4.2, 8.4, 12.6, 16.8 and 21 % (w/v) NaCl respectively was prepared by adding NaCl to the above stock solution. These were kept at room temperature.

For each of these six NaOH/NaCl/KCl solutions the following procedure was followed:

19 1 of the solution was transferred to a jacketed thermostatic reaction vessel provided with slow agitation means and a bottom outlet. After heating to 60 °C 1 kg of the chopped seaweed was added and completely soaked in the solution. To the vessel was added additional NaOH/NaCl/KCl solution of the initial type to make up a 20 1 volume

and the content was reheated to 60 °C and kept at this temperature. After 2.5 hours of slow or intermittent agitation at this temperature the reaction solution was drained from the vessel. The treated seaweed was removed from the vessel, its wet drained weight was recorded, and the seaweed was then re-transferred to the vessel.

The treated seaweed was then washed by adding 201 of cold tap water to the vessel and the seaweed was agitated at a constant rate for 10 min. The washing solution was drained from the vessel. This washing procedure was repeated twice.

Then the washed and drained seaweed was dried overnight in a drying cabinet with forced air circulation at a temperature of 60 - 70 °C. The dried material was ground to a particle size enabling passage through a 250 micron mesh screen. The final product termed SRC had a water content of approximately 5 %.

The milk gel strengths of the six samples from the trials were measured as described under the Performance Grading Methods section. However, instead of measuring at variable sample concentrations in order to compute a grade value, a constant amount of 0.556 g SRC was added to the 500 g total milk solution in all six cases. The results are expressed as Modulus and Rupture for each of the samples and may be seen in table 3 below.

**Table 3**

| Trial | NaCl conc. (% (w/v) | Swell factor after treatment | Milk Gel Measurements (average) | |
|---|---|---|---|---|
| | | | Modulus (g) | Rupture (g) |
| 1 | 0 | 2.5 | 8.9 | Disintegration |
| 2 | 4.2 | 2.5 | 9.7 | 18.4 |
| 3 | 8.4 | 2.3 | 10.7 | 20.8 |
| 4 | 12.6 | 2.4 | 15.7 | 35.3 |
| 5 | 16.8 | 2.1 | 16.0 | 32.5 |
| 6 | 21.0 | 2.1 | 16.0 | 35.0 |

It is seen from Table 3 that the seaweed swell factor - due to the wetting imparted by the alkali treatment - decreases with increasing salt concentration. Further it is seen from Table 3, that the milk gel moduli and rupture strength increase with increasing salt concentration over the range of 0 - 12 % (w/v) NaCl, illustrating that the reaction rate constant is dependent on salt concentration. For salt concentrations above 12 % (w/v), the data indicate that complete carrageenan precursor modification has been achieved (only slight differences in the measured results). For salt concentrations below 12 % (w/v), the data indicate that the carrageenan precursor modification has been incomplete.

## Example 3

This example illustrates that it is possible to obtain an incomplete alkali modification by conducting the alkali modification step in a solution having a reduced concentration of alkali.

Preparation of SRC

Approximately 10 kg of E. cottonii seaweed (approximately 60 % solids) was chopped into pieces having sizes of 2 - 4 cm and these were then mixed thoroughly. A stock solution of 701 of 24 % (w/v) NaCl and 1 % (w/v) KCl was prepared and kept at room temperature.

A series of three solutions having NaOH concentrations of 0, 0.8 and 5.0 % (w/v) NaOH respectively was prepared by adding NaOH to the above stock solution. These three solutions were kept at room temperature.

For each of these three NaOH/NaCl/KCl solutions the following procedure was followed:

19 1 of the solution was transferred to a jacketed thermostatic reaction vessel provided with slow agitation means and a bottom outlet. After heating to 75 ° C 1 kg of the chopped seaweed was added and completely soaked in the solution. To the vessel was added additional NaOH/NaCl/KCl solution of the initial type to make up a 20 volume and the content was reheated to 75 °C and kept at this temperature. After one hour of slow or intermittent agitation at this temperature the reaction solution was drained from the vessel.

The treated seaweed was then washed by adding 201 of cold tap water to the vessel and the seaweed was agitated at a constant rate for 10 min. The washing solution was drained from the vessel. This washing procedure was repeated twice.

Then the washed and drained seaweed was dried overnight in a drying cabinet with forced air circulation at a temperature of 60 - 70 °C. The dried material was ground to a particle size enabling passage through a 250 micron

mesh screen. The final product termed SRC had a water content of approximately 5 %.

The milk gel grade strengths °MIG-R and °MIG-B, on an as-is basis, of the three samples were measured as described under the Performance Grading Methods section. For comparison, a typical SRC product from a conventional plant scale process was also measured: GENU texturiser X-9513, lot no. 12 720-0. The results are seen in table 4 below.

**Table 4**

| Trial No. | NaOH conc. % (w/v) | Milk Gel Grade Strengths | |
|---|---|---|---|
| | | °MIG-R | °MIG-B |
| 1 | 0 | 56.3 | 47.8 |
| 2 | 0.8 | 77.9 | 79 |
| 3 | 5.0 | 221 | 252 |
| X-9513 | Prior art Process | 192 | 179 |

It appears from table 4 that the milk gel grade strengths increase with increasing alkali strength. In trial 2 (0.8 % (w/v) NaOH) the grade strengths are higher than in trial 1 (with 0% NaOH), but lower than in trial 3 (with 5.0 % (w/v) NaOH). This confirms the expectation that the reaction rate may be pseudo first order with respect to the hydroxyl concentration and that, at least in the cases of trial 1 and 2, the carrageenan precursor modification has been incomplete, as higher gel strength apparently is obtainable (as shown for trial 3) when using higher alkali strength.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

**1.** A method for the manufacture of gelling carrageenan(s), wherein mono-component seaweed containing gelling carrageenan precursor(s) is subjected to

a) a heterogenous reaction step in an aqueous alkaline medium having an $OH^-$ concentration and a temperature which enable the modification to the desired extent of the gelling carrageenan precursor(s) to the gelling carrageenan(s);
b) optionally one or more washing step(s) to wash out excess alkali;
c) optionally drying and optionally grinding to obtain semirefined carrageenan (SRC); and/or
d) optionally further extraction, purification and isolation to obtain refined carrageenan (RC)

**characterised in that** the OH- concentration required by the seaweed for modification in step a) is obtained by a solution of one or more of the alkalis selected among NaOH, $Na_2CO_3$, Na-phosphates, $K_2CO_3$, K-phosphates and ammonia, being supplied thereto, optionally also comprising other suitable alkalis, and **in that** the aqueous alkaline medium has a salt concentration sufficient to essentially prevent the dissolution of the gelling carrageenan(s) present in the seaweed tissue.

**2.** A method according to claim 1, **characterised in that** the sufficient salt concentration is provided in the aqueous alkaline medium by the addition of non-alkali salts.

**3.** A method according to claim 2, **characterised in that** the sufficient salt concentration is provided in the aqueous alkaline medium by addition of non-alkali salts selected among sulphates and chlorides of sodium, potassium and calcium.

**4.** A method according to claim 3, **characterised in that** sufficient salt concentration is provided in the aqueous alkaline medium by the addition of NaCl.

**5.** A method according to any of the preceding claims, **characterised in that** the steps a) and b) are carried out in a single reactor containing the seaweed by supplying and removing the liquids to be used to and from this reactor.

**6.** A method according to claims 1-4 wherein the steps a) to b) are carried out in multiple tanks containing aqueous

alkaline medium and washing solutions respectively through which the seaweed is moved.

**7.** A method according to any of the preceding claims, wherein the gelling carrageenan is a kappa-family carrageenan.

**8.** A method according to claim 7, wherein the gelling carrageenan is iota-carrageenan.

**9.** A method according to claim 7, wherein the washing liquid in at least one of the steps in b) comprises a potassium salt for exchanging the cations bound to the carrageenan polymer with potassium ions.

**10.** A method according to claim 9, wherein the potassium salt is selected among KCl and $K_2SO_4$.

**11.** A method according to claim 8, wherein the washing liquid in at least one of the steps in b) comprises a calcium salt for exchanging the cations bound to the carrageenan polymer with calcium ions.

**12.** A method according to claim 11, wherein the calcium salt is $CaCl_2$.

**13.** A method according to any of the preceding claims, wherein the mono-component seaweed is selected among the species Eucheuma cottonii, Hypnea musc., Eucheuma spinosum and Furcellaria umbric.

**14.** A method according to any of the preceding claims for processing more than one batch of mono-component seaweed, in particular dry mono-component seaweed, which method further comprising a series of one or more lye recovery steps involving one or more lye recovery solutions between step a) and step b), **characterised in that** used aqueous alkaline medium obtained in a) in one batch is reused in a) when running a later batch, and wherein for each of the lye recovery steps at least part of the used lye recovery solution obtained in one batch is reused in a step preceding this step when running a later batch, and wherein the rest of said used lye recovery solution obtained in one batch is reused in the same step when running a later batch, thereby enabling the recovery of the aqueous alkaline medium employed in the method.

**15.** A method according to any of the preceding claims, wherein the ratio of NaOH, $Na_2CO_3$, Na-phosphates, $K_2CO_3$, K-phosphates or ammonia, or mixtures thereof to the total amount of alkali in the alkali solution supplied to the seaweed in step a), calculated on a dry weight/weight basis, is within the range of 10 - 100 %, such as within the range of 20 - 100 % or 30 - 100 %, preferable within the range of 40 - 100%, more preferred within the range of 50 - 100 %, even more preferred within the range of 60 - 100 %, yet more preferred within the range of 70 - 100 %, such as 80 - 100 % and most preferred within the range of 90 - 100 %.

**16.** A method according to claim 15, wherein the ratio of NaOH, $Na_2CO_3$, Na-phosphates, $K_2CO_3$, K-phosphates or ammonia, or mixtures thereof to the total amount of alkali in the alkali solution supplied to the seaweed in step a), calculated on a dry weight/weight basis, is approximately 100 %.

**17.** A method according to claim 16, wherein the alkali in the alkali solution supplied to the seaweed in step a) essentially solely comprises NaOH.

**18.** A method according to any of the preceding claims, wherein the extent of modification of the gelling carrageenan precursor(s) is/are less than complete modification.

**19.** A method according to any of the preceding claims, wherein the washing liquid in at least one of the steps in b), comprises a bleaching agent, such as eg. hypochlorite and/or hydrogen peroxide in order to bleach the seaweed.

**20.** A method according to any of the claims 1-19. wherein only the steps a), b) and c) are performed.

**21.** A method according to any of the claims 1 - 19, wherein only the steps a), b) and d) are performed.

**22.** A method according to any of the claims 1 - 19, wherein the steps a), b), c) and d) are performed.

**23.** A method according to claims 1 - 8 and 13 - 18, wherein only the steps a) and d) are performed.

## Patentansprüche

1. Verfahren zur Herstellung von gelierendem Carrageenan bzw. gelierenden Carrageenanen, wobei Monokomponenten-Seealgen, die (einen) Precursor für gelierendes Carrageenan enthalten,

   a) einem heterogenen Reaktionsschritt in einem wässrigen alkalischen Medium unterzogen werden, das eine $OH^-$-Konzentration und eine Temperatur aufweist, die die Modifikation der bzw. des Precursor(s) für ein gelierendes Carrageenan bzw. für gelierende Carrageenane zum gewünschten Ausmaß zum gelierenden Carrageenan bzw. zu den gelierenden Carrageenanen ermöglichen;
   b) ferner optional einem oder mehreren Waschschritten, um überschüssiges Alkali auszuwaschen;
   c) ferner optional Trockenen und optional Mahlen, um halbraffiniertes Carrageenan (SRC) zu erhalten; und/oder
   d) ferner optional weiterer Extraktion, Reinigung und Isolierung, um raffiniertes Carragenan (RC) zu erhalten,

   **dadurch gekennzeichnet, dass** die von der Seealge zur Modifikation in Schritt a) erforderliche $OH^-$-Konzentration durch eine Lösung von einem oder mehreren Alkalien erhalten wird, die aus NaOH, $Na_2CO_3$, Na-Phosphaten, $K_2CO_3$, K-Phosphaten und Ammoniak gewählt ist, die dieser zugeführt wird, die optional auch andere geeignete Alkalien umfasst, und **dadurch**, dass das wässrige alkalische Medium eine Salzkonzentration aufweist, die ausreicht, um die Auflösung des im Seealgengewebe vorhandenen gelierenden Carrageens bzw. der gelierenden Carrageenane im Wesentlichen zu verhindern.

2. Verfahren nach Anspruch 1, **dadurch gekennzeichnet, dass** die ausreichende Salzkonzentration im wässrigen alkalischen Medium durch die Zugabe von Nicht-Alkalisalzen bereitgestellt wird.

3. Verfahren nach Anspruch 2, **dadurch gekennzeichnet, dass** die ausreichende Salzkonzentration im wässrigen alkalischen Medium durch Zugabe von Nicht-Alkalisalzen bereitgestellt wird, die aus Sulfaten und Chloriden von Natrium, Kalium und Calcium gewählt sind.

4. Verfahren nach Anspruch 3, **dadurch gekennzeichnet, dass** die ausreichende Salzkonzentration im wässrigen alkalischen Medium durch Zugabe von NaCl bereitgestellt wird.

5. Verfahren nach einem der vorigen Ansprüche, **dadurch gekennzeichnet, dass** die Schritte a) und b) in einem einzelnen Reaktor ausgeführt werden, der die Seealge enthält, durch Zuführen und Entfernen der zu verwendenden Flüssigkeiten in den und aus dem Reaktor.

6. Verfahren nach Anspruch 1 bis 4, wobei die Schritte a) bis b) in mehreren Tanks ausgeführt werden, die ein wässriges alkalisches Medium bzw. Waschlösungen enthalten, durch die die Seealge bewegt wird.

7. Verfahren nach einem der vorigen Ansprüche, wobei das gelierende Carrageenan ein Carrageenan der Kappa-Familie ist.

8. Verfahren nach Anspruch 7, wobei das gelierende Carrageenan ein Iota-Carrageenan ist.

9. Verfahren nach Anspruch 7, wobei die Waschflüssigkeit in wenigstens einem der Schritte in b) ein Kaliumsalz zum Austausch der Kationen, die an das Carrageenanpolymer gebunden sind, durch Kaliumionen umfasst.

10. Verfahren nach Anspruch 9, wobei das Kaliumsalz aus KCl und $K_2SO_4$ gewählt ist.

11. Verfahren nach Anspruch 8, wobei die Waschflüssigkeit in wenigstens einem der Schritte in b) ein Calciumsalz zum Austausch der Kationen, die an das Carrageenanpolymer gebunden sind, durch Calciumionen umfasst.

12. Verfahren nach Anspruch 11, wobei das Calciumsalz $CaCl_2$ ist.

13. Verfahren nach einem der vorigen Ansprüche, wobei die Monokomponenten-Seealge aus der Art Eucheuma cottonii, Hypnea musc., Eucheuma spinosum und Furcellaria umbric. gewählt ist.

14. Verfahren nach einem der vorigen Ansprüche zur Verarbeitung von mehr als einer Charge von Monokomponenten-Seealge, insbesondere trockene Monokomponenten-Seealge, welches Verfahren darüber hinaus eine Reihe von einem oder mehreren Laugenrückgewinnungsschritten umfasst, die eine oder mehrere Laugenrückgewinnungslösungen zwischen Schritt a) und Schritt b) einbezieht, **dadurch gekennzeichnet, dass** gebrauchtes wässriges alkalisches Medium, das in Schritt a) erhalten wird, bei einer Charge in a) wieder verwendet wird, wenn eine spätere Charge laufen gelassen wird, und wobei für jeden der Laugenrückgewinnungsschritte wenigstens ein Teil der gebrauchten Laugenrückgewinnungslösung, die bei einer Charge erhalten wird, bei einem Schritt wieder verwendet wird, der diesem Schritt vorausgeht, wenn eine spätere Charge laufen gelassen wird, und wobei der Rest der gebrauchten Laugenrückgewinnungslösung, die bei einer Charge erhalten wird, beim gleichen Schritt verwendet wird, wenn eine spätere Charge laufen gelassen wird, wodurch die Rückgewinnung des wässrigen alkalischen Mediums ermöglicht wird, das bei dem Verfahren eingesetzt wird.

**15.** Verfahren nach einem der vorigen Ansprüche, wobei das auf der Grundlage Trockengewicht/Gewicht berechnete Verhältnis von NaOH, $Na_2CO_3$, Na-Phosphaten, $K_2CO_3$, K-Phosphaten oder Ammoniak oder Mischungen davon zur Gesamtmenge an Alkali in der Alkalilösung, die der Seealge in Schritt a) zugeführt wird, innerhalb des Bereichs von 10 bis 100 % liegt, wie etwa innerhalb des Bereichs von 20 bis 100 % oder 30 bis 100 %, vorzugsweise innerhalb des Bereichs von 40 bis 100 %, besser innerhalb des Bereichs 50 bis 100 %, noch besser innerhalb des Bereichs von 60 bis 100 %, noch viel besser innerhalb des Bereichs von 70 bis 100 %, wie etwa 80 bis 100 %, und am besten innerhalb des Bereichs von 90 bis 100 %.

**16.** Verfahren nach Anspruch 15, wobei das auf der Grundlage Trockengewicht/Gewicht berechnete Verhältnis von NaOH, $Na_2CO_3$, Na-Phosphaten, $K_2CO_3$, K-Phosphaten oder Ammoniak oder Mischungen davon zur Gesamtmenge an Alkali in der Alkalilösung, die der Seealge in Schritt a) zugeführt wird, ungefähr 100 % beträgt.

**17.** Verfahren nach Anspruch 16, wobei das Alkali in der Alkalilösung, die der Seealge in Schritt a) zugeführt wird, ausschließlich NaOH umfasst.

**18.** Verfahren nach einem der vorigen Ansprüche, wobei das Ausmaß der Modifikation des Percursors bzw. der Precursor für gelierendes Carrageenan geringer ist, als vollständige Modifikation.

**19.** Verfahren nach einem der vorigen Ansprüche, wobei die Waschflüssigkeit in wenigstens einem der Schritte in b) ein Bleichmittel umfasst, wie etwa beispielsweise Hypochlorit und/oder Wasserstoffperoxid, um die Seealge zu bleichen.

**20.** Verfahren nach einem der Ansprüche 1 bis 19, wobei nur die Schritte a), b) und c) ausgeführt werden.

**21.** Verfahren nach einem der Ansprüche 1 bis 19, wobei nur die Schritte a), b) und d) ausgeführt werden.

**22.** Verfahren nach einem der Ansprüche 1 bis 19, wobei die Schritte a), b), c) und d) ausgeführt werden.

**23.** Verfahren nach einem der Ansprüche 1 bis 8 und 13 bis 18, wobei nur die Schritte a) und d) ausgeführt werden.

## Revendications

**1.** Procédé de fabrication de carraghénane(s) gélifiant(s), dans lequel on soumet une algue mono-composant contenant un (des) précurseur(s) de carraghénane(s) gélifiant(s) à

a) une étape de réaction hétérogène dans un milieu aqueux alcalin ayant une concentration en $OH^-$ et une température qui permettent la modification au degré désiré du (des) précurseur(s) de carraghénane(s) gélifiant(s) en carraghénane(s) gélifiant(s) ;
b) éventuellement une ou plusieurs étape(s) de lavage pour éliminer par lavage l'excès d'alcali ;
c) éventuellement le séchage et éventuellement le broyage pour obtenir du carraghénane semi raffiné (CSR) ; et/ou
d) éventuellement en outre l'extraction, la purification et l'isolation pour obtenir du carraghénane raffiné (CR),

**caractérisé en ce qu'**on obtient la concentration en $OH^-$ nécessitée par l'algue pour la modification dans l'étape a) par une solution d'un ou de plusieurs alcalis choisis parmi NaOH, $Na_2CO_3$, des phosphates de Na, $K_2CO_3$, des phosphates de K et l'ammoniaque, qui lui est fournie, comprenant éventuellement également d'autres alcalis convenables, et **en ce que** le milieu aqueux alcalin a une concentration en sel suffisante pour empêcher essentiellement la dissolution du (des) carraghénane(s) gélifiant(s) présent(s) dans le tissu de l'algue.

**2.** Procédé selon la revendication 1, **caractérisé en ce que** la concentration en sel suffisante est fournie dans le milieu aqueux alcalin par addition de sels non alcalins.

**3.** Procédé selon la revendication 2, **caractérisé en ce que** la concentration en sel suffisante est fournie dans le milieu aqueux alcalin par addition de sels non alcalins choisis parmi des sulfates et des chlorures de sodium, de potassium et de calcium.

**4.** Procédé selon la revendication 3, **caractérisé en ce que** la concentration en sel suffisante est fournie au milieu aqueux alcalin par addition de NaCl.

**5.** Procédé selon l'une quelconque des revendications précédentes, **caractérisé en ce qu'**on effectue les étapes a) et b) dans un réacteur unique contenant l'algue en fournissant et en éliminant les liquides devant être utilisés à et de ce réacteur.

**6.** Procédé selon les revendications 1 à 4, dans lequel on effectue les étapes a) à b) dans des réservoirs multiples contenant respectivement le milieu aqueux alcalin et les solutions de lavage à travers lesquels la l'algue est déplacée.

**7.** Procédé selon l'une quelconque des revendications précédentes, dans lequel le carraghénane gélifiant est un carraghénane ce la famille kappa.

**8.** Procédé selon la revendication 7, dans lequel le carraghénane gélifiant est le iota-carraghénane.

**9.** Procédé selon la revendication 7, dans lequel le liquide de lavage dans au moins une des étapes dans b) comprend un sel de potassium pour échanger les cations liés au polymère carraghénane par des ions potassium.

**10.** Procédé selon la revendication 9, dans lequel le sel de potassium est choisi parmi KCl et $K_2SO_4$.

**11.** Procédé selon la revendication 8, dans lequel le liquide de lavage dans au moins une des étapes dans b) comprend un sel de calcium pour échanger les cations liés au polymère carraghénane par des ions calcium.

**12.** Procédé selon la revendication 11, dans lequel le sel de calcium est $CaCl_2$.

**13.** Procédé selon l'une quelconque des revendications précédentes, dans lequel l'algue mono-composant est choisie parmi les espèces Eucheuma cottonii, Hypnea musc., Eucheuma spinosum et Furcellaria umbric.

**14.** Procédé selon l'une quelconque des revendications précédentes pour traiter plus d'un lot d'algue mono-composant, en particulier d'algue mono-composant sèche, ce procédé comprenant en outre une série d'une ou plusieurs étapes de récupération de lessive comprenant une ou plusieurs solutions de récupération de lessive entre l'étape a) et l'étape b), **caractérisé en ce que** le milieu aqueux alcalin usé obtenu dans a) est réutilisé dans un lot suivant quand le lot suivant fonctionne, et dans lequel pour chacune des étapes de récupération de lessive au moins une partie de la solution de récupération de lessive usée obtenue dans un lot est réutilisée dans une étape précédant cette étape quand un lot suivant fonctionne, et dans lequel le reste de ladite solution de récupération de lessive alcaline usée obtenue dans un lot est réutilisé dans la même étape quand un lot suivant fonctionne, en permettant ainsi la récupération du milieu aqueux alcalin employé dans le procédé.

**15.** Procédé selon l'une quelconque des revendications précédentes, dans lequel le rapport de NaOH, de $Na_2CO_3$, des phosphates de Na, de $K_2CO_3$, des phosphates de K ou de l'ammoniaque, ou de leurs mélanges à la quantité totale d'alcali dans la solution d'alcali fournie à l'algue dans l'étape a), calculé sur une base poids/poids sec, est dans la plage de 10 à 100 %, telle que dans la plage de 20 à 100 % ou 30 à 100 %, de préférence dans la plage de 40 à 100 %, plus préférablement dans la plage de 50 à 100 %, même plus préférablement dans la plage de 60 à 100 %, encore plus préférablement dans la plage de 70 à 100 %, telle que 80 à 100 % et encore plus préférablement dans la plage de 90 à 100%.

**16.** Procédé selon la revendication 15, dans lequel le rapport de NaOH, de $Na_2CO_3$, des phosphates de Na, de $K_2CO_3$, des phosphates de K ou de l'ammoniaque, ou de leurs mélanges à la quantité totale d'alcali dans la solution alcaline fournie à l'algue dans l'étape a), calculé sur une base poids/poids sec, est approximativement 100 %.

**17.** Procédé selon la revendication 16, dans lequel l'alcali dans la solution d'alcali fournie à l'algue dans l'étape a)

comprend essentiellement uniquement NaOH.

**18.** Procédé selon l'une quelconque des revendications précédentes, dans lequel le degré de modification du (des) précurseur(s) de carraghénane(s) gélifiant(s) est/sont inférieur(s) à une modification complète.

**19.** Procédé selon l'une quelconque des revendications précédentes, dans lequel le liquide de lavage dans au moins une des étapes dans b), comprend un agent de blanchiment, tel que par exemple l'hypochlorite et/ou le peroxyde d'hydrogène de manière à blanchir l'algue.

**20.** Procédé selon l'une quelconque des revendications 1 à 19, dans lequel on effectue seulement les étapes a), b) et c).

**21.** Procédé selon l'une quelconque des revendications 1 à 19, dans lequel on effectue seulement les étapes a), b) et d).

**22.** Procédé selon l'une quelconque des revendications 1 à 19, dans lequel on effectue les étapes a), b), c) et d).

**23.** Procédé selon les revendications 1 à 8 et 13 à 18, dans lequels on effectue seulement les étapes a) et d).

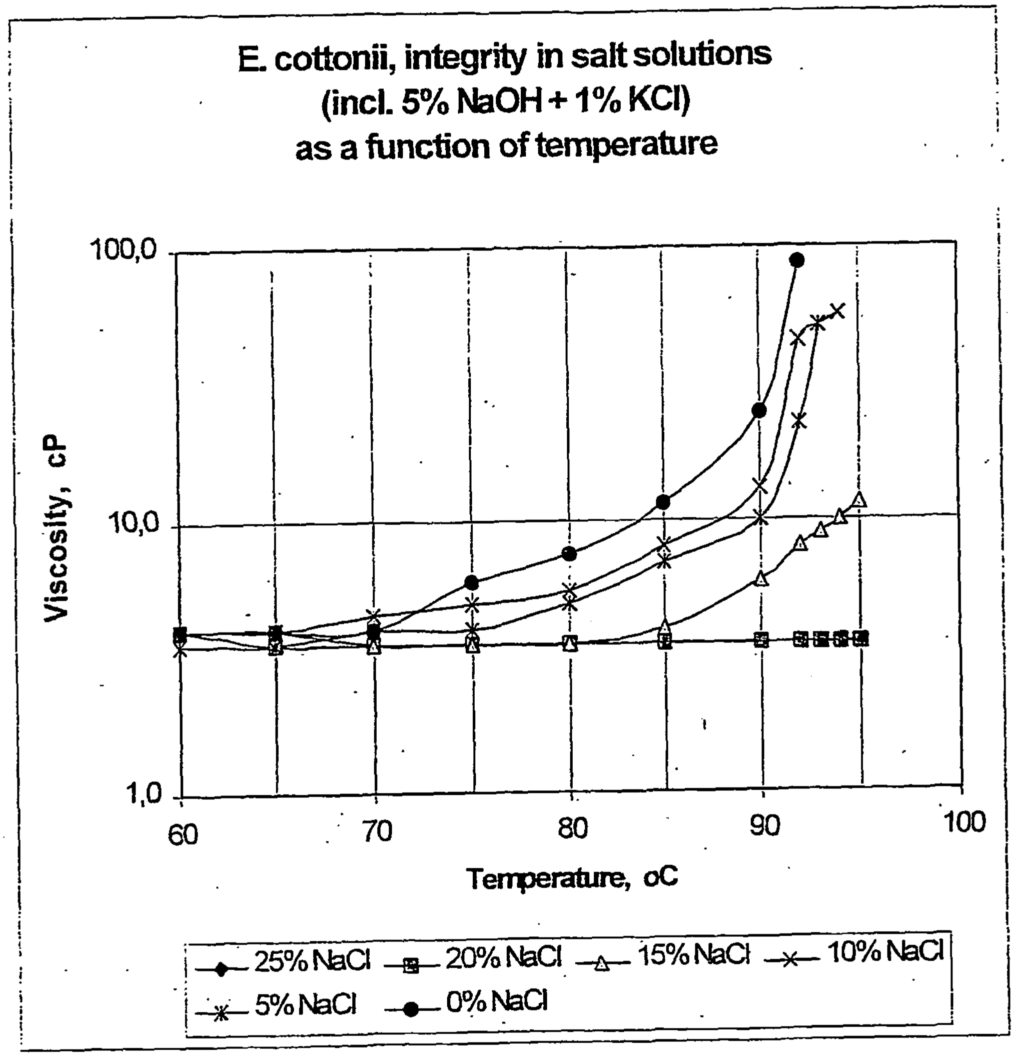
E. cottonii, integrity in salt solutions
(incl. 5% NaOH + 1% KCl)
as a function of temperature
Viscosity, cP
100,0
10,0
1,0
60
70
80
90
100
Temperature, oC
25% NaCl
20% NaCl
15% NaCl
10% NaCl
5% NaCl
0% NaCl

Fig. 1

Fig. 2

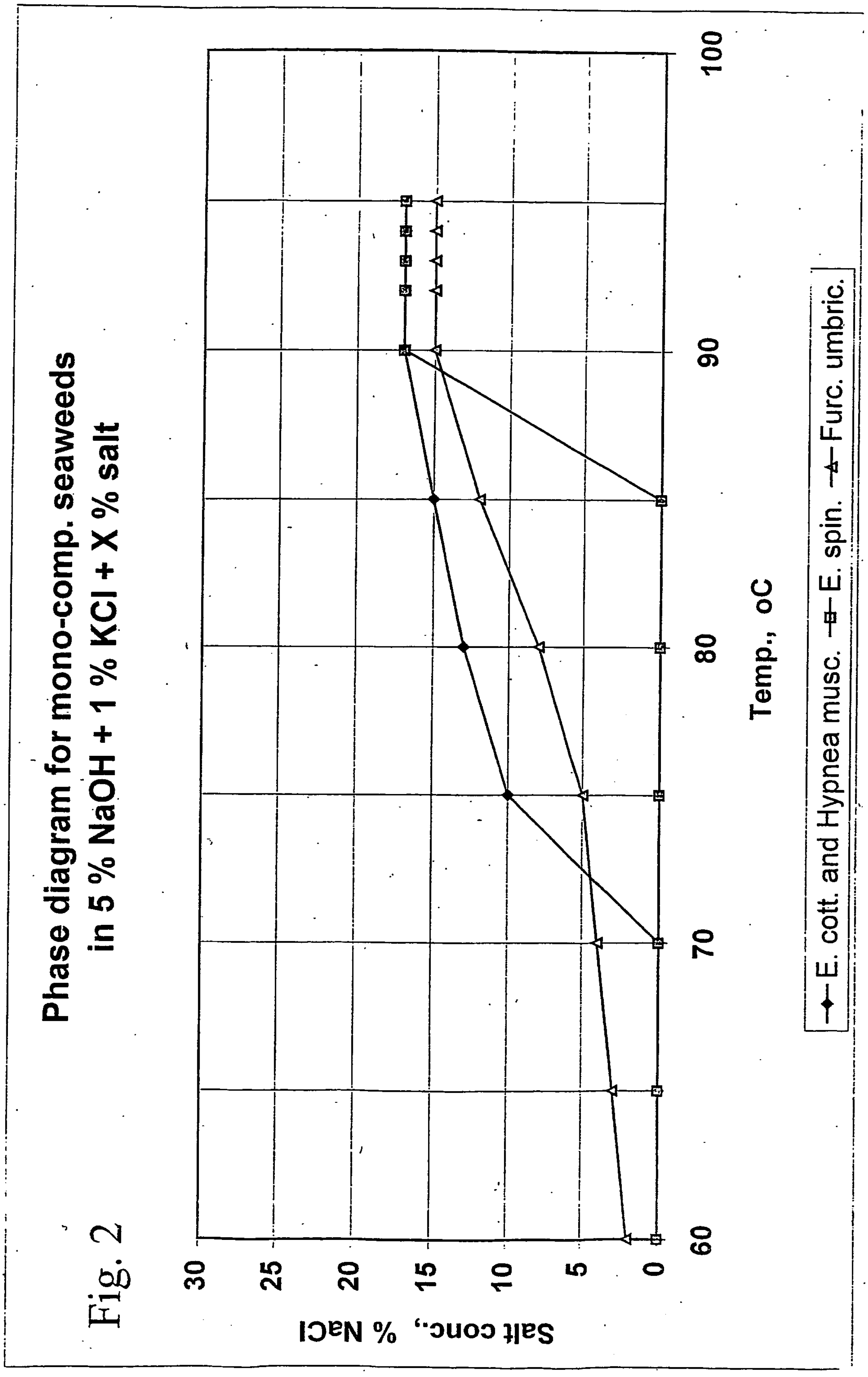
Phase diagram for mono-comp. seaweeds
in 5 % NaOH + 1 % KCl + X % salt
Salt conc., % NaCl
30
25
20
15
10
5
0
60
70
80
90
100
Temp., oC
E. cott. and Hypnea musc.
E. spin.
Furc. umbric.

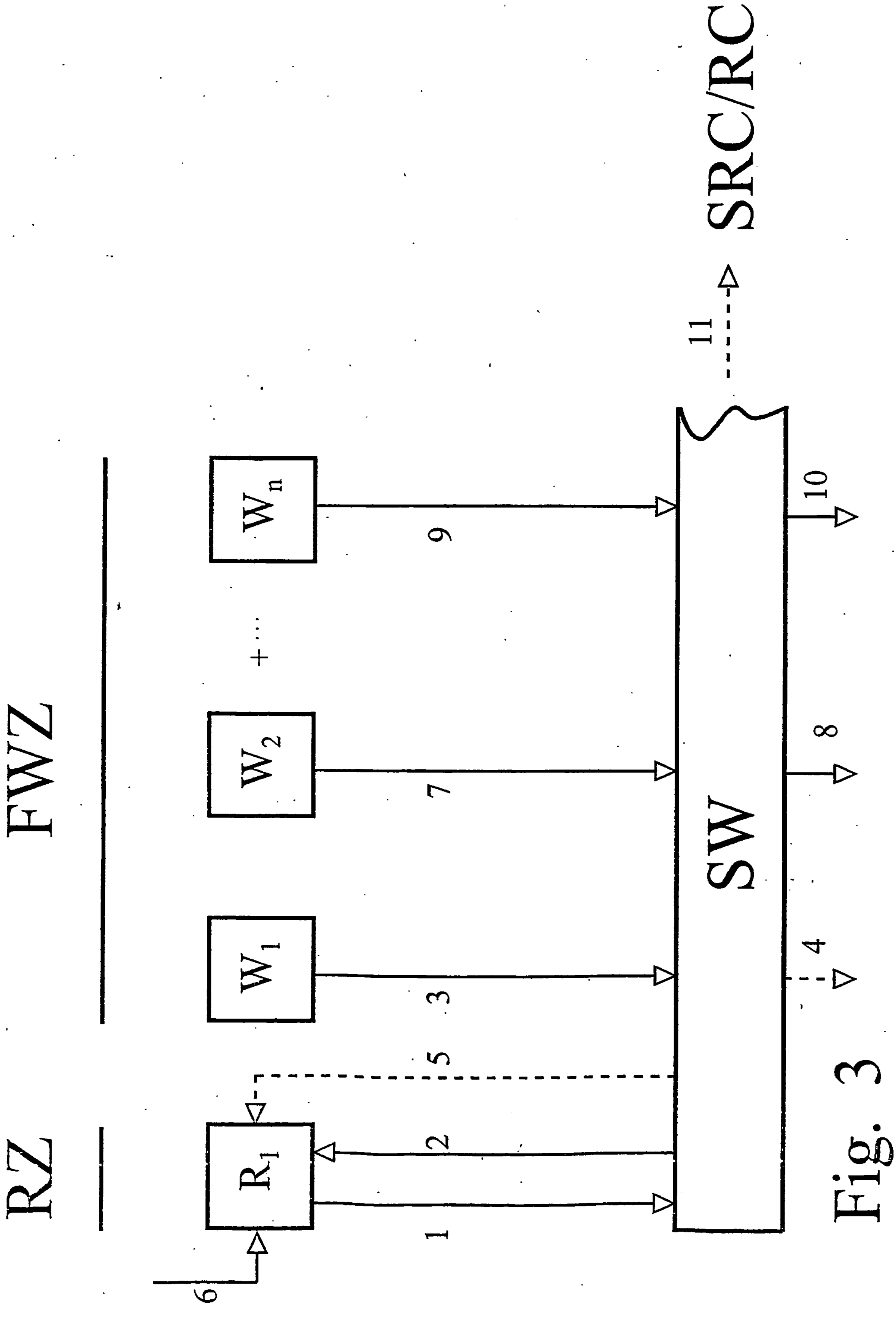


Fig. 3

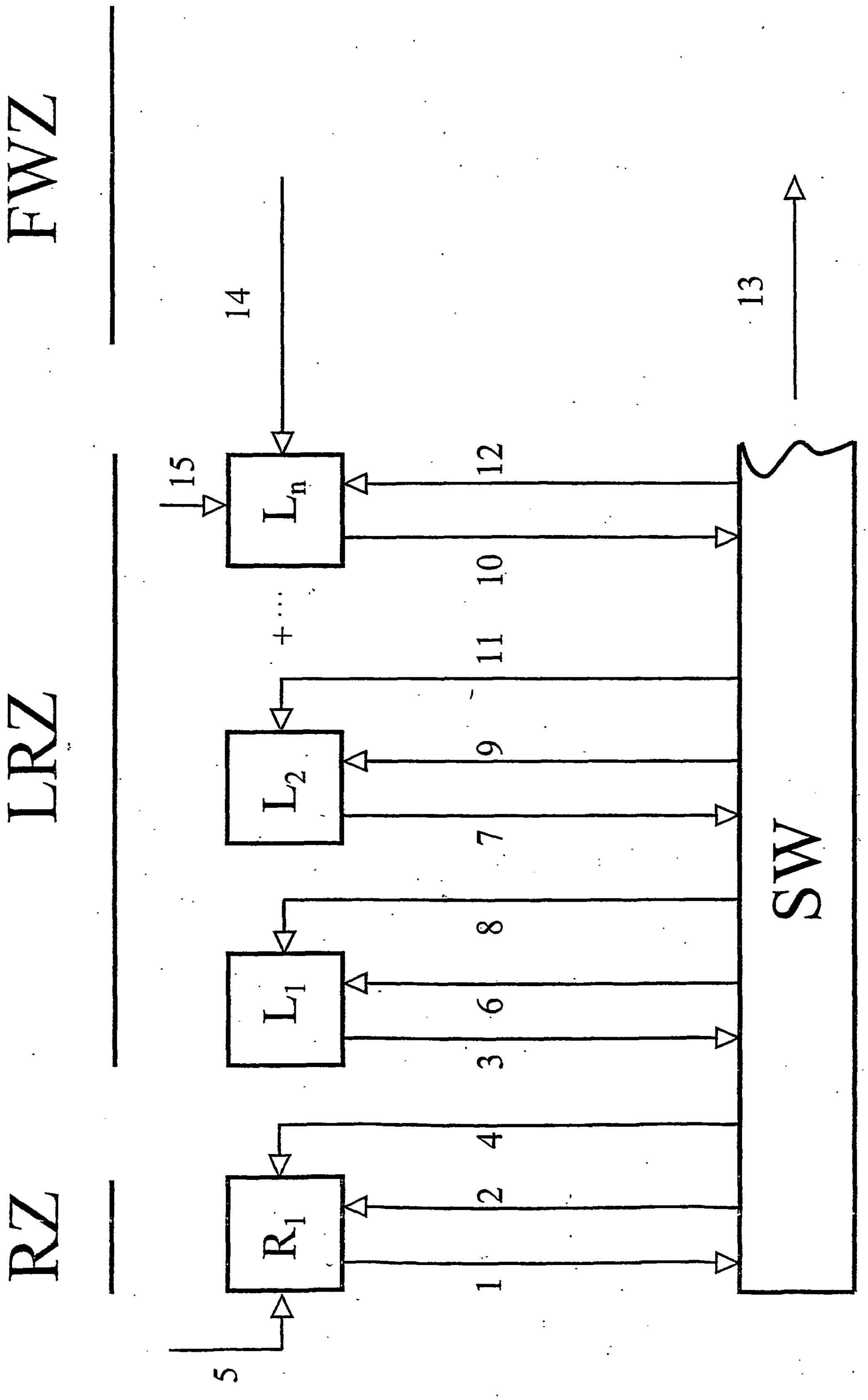


Fig. 4